# EUROPÄISCHE PATENTANMELDUNG

(11) **EP 2 755 446 A1**
(43) Veröffentlichungstag der Anmeldung: **16.07.2014**
(21) Anmeldenummer: 13151258.4
(22) Anmeldetag: 15.01.2013
(51) Int. Cl.: H05B 33/08, H05B 37/03

(54) **Adapterschaltung**

(71) Anmelder: Hella KGaA Hueck & Co., 59552 Lippstadt (DE)
(72) Erfinder: Rupprath, Bernhard, 59556 Lippstadt (DE); Schmitz, Klaus-Peter, 59558 Lippstadt (DE)

(57) **Zusammenfassung**

Die Erfindung betrifft eine Adapterschaltung zum Verbinden eines Schaltkreises eines mit LED als Leuchtmittel ausgestatteten Flughafenfeuers und einer sekundärseitigen Wicklung (Sekundärseite) eines Speisetransformators, wobei wenigstens ein Schaltelement vorgesehen ist zum wahlweisen Herstellen oder Unterbrechen der Verbindung und wobei wenigstens eine Ansteuerschaltung vorgesehen ist zum Betätigen des Schaltelements beim Überschreiten eines vorgegebenen Spannungsniveaus, wobei das Schaltelement zwischen der Ansteuerschaltung und der Sekundärseite des Speisetransformators vorgesehen ist und/oder dass die Ansteuerschaltung mit dem Schaltkontakt und dem Schaltkreis des LED-Flughafenfeuers verbunden ist.

## Beschreibung

Die Erfindung betrifft eine Adapterschaltung zum Verbinden eines Schaltkreises eines mit LED als Leuchtmittel ausgestatteten Flughafenfeuers und einer sekundärseitigen Wicklung (Sekundärseite) eines Speisetransformators, wobei wenigstens ein Schaltelement vorgesehen ist zum wahlweisen Herstellen oder Unterbrechen der Verbindung und wobei wenigstens eine Ansteuerschaltung vorgesehen ist zum Betätigen des Schaltelements beim Überschreiten eines vorgegebenen Spannungsniveaus.

Auf Flughäfen orientieren sich Piloten während des Starts und auf dem Rollfeld durch sogenannte Flughafenfeuer, welche entlang der Rollwege bzw. der Startbahn in den Bodenbelag eingelassen sind. Diese Flughafenfeuer müssen äußerst zuverlässig arbeiten und den Piloten insbesondere bei schlechten Sichtverhältnissen, beispielsweise bei Dunkelheit oder Nebel, zuverlässig führen. Sollten einzelne Lampen der Flughafenbefeuerung ausfallen, muss dieser Defekt zur Wahrung der Sicherheit schnell erkannt und behoben werden. Da die visuelle Inspektion bei der großen Vielzahl der Lampen zeitaufwendig und teuer wäre, wird üblicherweise eine Detektorschaltung zur Erkennung defekter Lampen vorgesehen. Die einzelnen Lampen werden üblicherweise über individuelle Speisetransformatoren gespeist, wobei die Detektorschaltung dem Speisetransformator zugeordnet ist.

Über lange Jahre waren konventionelle Lampen, insbesondere Halogenlampen, die kostengünstigsten und zuverlässigsten Leuchtmittel für die Flughafenbefeuerung. Für derartige Halogenlampen existieren am Markt über lange Jahre erprobte Detektorschaltungen. Beispielsweise beschreibt die US 3,061,828 eine solche Schaltung. Die Schaltung macht sich zunutze, dass bei einem Defekt der Halogenlampe der Transformator seine Sättigung erreicht. Infolge der Sättigung verändern sich die Amplitude und die Phase der Spannung. Diese Veränderung kann mittels der Detektorschaltung erkannt und so zuverlässig auf einen Defekt bzw. einen Ausfall des Leuchtmittels geschlossen werden.

Die am Markt bekannten Detektorschaltungen sind auf Halogenlampen ausgelegt. Sie können in modernen Leuchtfeuern mit LED-Leuchtmitteln, wie sie beispielsweise das US-Patent 7,654,720 beschreibt, aufgrund ihres andersartigen Verhaltens im Falle eines Defekts nicht ohne Weiteres eingesetzt werden. Vor diesem Hintergrund offenbart die nachveröffentlichte internationale Patentanmeldung PCT/EP2012/059154 der Anmelderin eine Adapterschaltung, über die das Verhalten eines LED-Leuchtfeuers im Falle eines Defekts der bekannten Charakteristik einer Halogenlampe angenähert werden soll. Obwohl sich die Adapterschaltung grundsätzliche bewährt hat, kann es insbesondere aufgrund eines Reststroms, der auch im Fehlerfall über die Adapterschaltung fließt, zu Fehlern bei der Ausfallerkennung kommen. Überdies zeigt die Adapterschaltung beim Einschalten nach einem Fehlerzustand ein verzögertes Ansprechverhalten. Insofern wird ein nicht behobener Defekt nach dem Wiedereinschalten zeitverzögert erkannt.

Aufgabe der vorliegenden Erfindung ist es demzufolge, eine modifizierte Adapterschaltung für ein LED-Flughafenfeuer bereitzustellen, die einen Defekt sicher erkennt und ein verbessertes Ansprechverhalten bei der Wiederinbetriebnahme zeigt.

Zur Lösung der Aufgabe ist die Erfindung in Verbindung mit dem Oberbegriff des Patentanspruchs 1 dadurch gekennzeichnet, dass das Schaltelement zwischen der Ansteuerschaltung und der Sekundärseite des Speisetransformators vorgesehen ist und/oder dass die Ansteuerschaltung mit dem Schaltkontakt und dem Schaltkreis des LED-Flughafenfeuers verbunden ist.

Der besondere Vorteil der Erfindung besteht darin, dass im Fehlerfall bei geöffnetem Schaltelement kein Reststrom über die sekundäre Wicklung des Speisetransformators und die Auswerteschaltung fließt. Die dem Speisetransformator zugeordnete Detektorschaltung findet exakt den Zustand, der auch bei Halogenlampen im Falle eines Defekts vorliegt und funktioniert dementsprechend zuverlässig. Umfangreiche Feldversuche der Anmelderin haben diesbezüglich gezeigt, dass die Adapterschaltung mit allen der Anmelderin bekannten Detektorschaltungen fehlerfrei zusammenarbeitet. Es kann insofern unabhängig von der Detektorschaltung eine einzige, immer gleiche Adapterschaltung verwendet werden, die im Falle eines Defekts des LED-Flughafenfeuers dessen Schaltkreis vollständig vom Speisetransformator trennt und exakt das Verhalten von Halogenlampen nachbildet. Zugleich können die am Markt bekannten Detektorschaltungen ohne Änderung eingesetzt werden zur Überwachung von LED-Flughafenfeuern.

Kerngedanke der Erfindung ist es insofern, dass Schaltelement anders als bisher der Auswerteschaltung auf der Sekundärseite des Speisetransformators zuzuordnen. Das Schaltelement befindet sich somit schaltungstechnisch zwischen der Sekundärseite des Speisetransformators und der Auswerteschaltung. Die Auswerteschaltung ist unmittelbar mit dem Schaltkreis des LED-Flughafenfeuers und mittelbar über das Schaltelement mit der Sekundärseite des Speisetransformators verbunden.

Mittels der Ansteuerschaltung kann ein beliebiges Schaltelement betätigt werden. Beispielsweise kann ein Halbleiterschaltelement, insbesondere ein Triac, Thyristor oder MOSFET eingesetzt werden zum Trennen der Sekundärseite des Transformators von dem Schaltkreis des LED-Flughafenfeuers.

Nach einer bevorzugten Ausführungsform der Erfindung ist ein bistabiles Relais mit wenigstens einem Schaltkontakt und mit mindestens einer Relaisspule zum Betätigen des Schaltkontakts vorgesehen. Der Schaltkontakt dient als das mit der Ansteuerschaltung zusammenwirkende Schaltelement und stellt in einem Verbindungszustand des Relais die Verbindung des Schaltkreises des LED-Flughafenfeuers mit dem Speisetransformator her bzw. trennt diese in einen Öffnungszustand des Relais. Vorteilhaft wird durch die Verwendung des bistabilen Relais ein Fehler auch im unbestromten Zustand des Relais von diesem abgebildet. Im Falle eines Defekts des LED-Flughafenfeuers öffnet sich ein Schaltkontakt des bistabilen Relais und trennt den Schaltkreis des Flughafenfeuers von der Sekundärseite des Speisetransformators. Das bipolare Relais befindet sich insofern im Fehlerfall in einem Öffnungszustand. Der Öffnungszustand des Relais ist aufgrund seiner konstruktiven Ausgestaltung als stabiler Öffnungszustand ausgebildet, welcher auch beibehalten wird, wenn das Relais nicht mehr bestromt ist. Ebenso ist ein Verbindungszustand des Relais während des Normalbetriebs des LED-Flughafenfeuers als stabiler Verbindungszustand ausgebildet.

Durch das Vorsehen des bistabilen Relais wird insofern eine Art von Fehlerspeicher in der Adapterschaltung realisiert. Unabhängig vom Bestromungszustand des Relais kann der Funktionszustand des LED-Flughafen-feuers unmittelbar am Schaltzustand des Relais erkannt werden. Befindet sich das Relais - durchstromt oder unbestromt - im Öffnungszustand, ist zuvor ein Defekt am LED-Flughafenfeuer erkannt worden. Ist demgegenüber das Relais - bestromt oder unbestromt - im Verbindungszustand, befindet sich das LED-Flughafenfeuer in einem ordnungsgemäßen Zustand.

Ein weiterer Vorteil der Verwendung des bistabilen Relais ist, dass bei der Wiederinbetriebnahme des LED-Flughafenfeuers der vormalige Fehlerzustand unmittelbar durch den stabilen Schaltzustand des Relais abgebildet ist. War das Relais des LED-Flughafenfeuers bei der Außerbetriebnahme und das bistabile Relais in seinem Öffnungszustand, befindet sich das Relais auch bei der Wiederinbetriebnahme im Öffnungszustand. Unmittelbar bei der Wiederinbetriebnahme kann insofern der Fehlerzustand anhand der Spannungscharakteristik des Transformators erkannt werden. Die Fehlererkennung ist insbesondere innerhalb eines Zeitfensters von zwei Sekunden, wie es an einer Stop Bar gefordert ist, zuverlässig möglich.

Nach einer Weiterbildung der Erfindung weist die Ansteuerschaltung wenigstens eine mit dem Schaltkreis des LED-Flughafenfeuers verbundene Gleichrichterdiode, bevorzugt eine Gleichrichterbrückenanordnung, und eine Filteranordnung zum Filtern von Strom und/oder Spannung der Gleichrichterdiode bzw. der Gleichrichterbrückenanordnung auf. Die Filteranordnung umfasst beispielsweise einen Widerstand und eine hierzu in Reihe geschaltete Kapazität, wobei eine Relaisspule parallel verschaltet ist zu dem Kondensator der Filteranordnung. Vorteilhaft wird hierdurch der durch die Relaisspule fließende Strom limitiert bei gleichzeitig geringem Energiebedarf.

Nach einer Weiterbildung der Erfindung ist das bistabile Relais als ein Stromstoßrelais oder als ein Haftrelais oder als ein Stützrelais ausgebildet. Vorteilhaft handelt es sich hierbei um in großen Stückzahlen kostengünstig hergestellte Relais, welche ausreichend erprobt sind und zuverlässig funktionieren.

Nach einer Weiterbildung der Erfindung weist das Relais einen Steuereingang auf, über den es in den Verbindungszustand zurückgesetzt werden kann. Vorteilhaft kann das Relais nach der Instandsetzung eines defekten LED-Flughafenfeuers über den Steuerzustand einmalig betätigt und in den Verbindungszustand versetzt werden. Bei der Wiederinbetriebnahme wird das LED-Flughafenfeuer dann ordnungsgemäß bestromt, und ein Defekt wird nicht erkannt. Insofern dient der Steuerzustand quasi der individuellen Umschreibung des durch das bistabile Relais gebildeten Speichers der Adapterschaltung.

Aus den weiteren Unteransprüchen und der nachfolgenden Beschreibung ergeben sich weitere Vorteile, Merkmale und Einzelheiten der Erfindung. Die in den Ansprüchen und in der Beschreibung erwähnten Merkmale können jeweils einzeln für sich oder in beliebiger Kombination erfindungswesentlich sein.

Anhand der beigefügten Zeichnungen wird die Erfindung nachfolgend näher erläutert. Dabei zeigt:
- Fig. 1: eine Anordnung der Adapterschaltung zwischen der Sekundärseite eines Speisetransformators und einem Schaltkreis eines LED-Flughafenfeuers,
- Fig. 2: eine erste Ausführungsform der Adapterschaltung mit einer Gleichrichterbrückenanordnung,
- Fig. 3: eine zweite Ausführungsform der Adapterschaltung mit zwei Schaltkontakten und
- Fig. 4: ein Ausführungsbeispiel eines die Adapterschaltung aufweisenden Adapters.

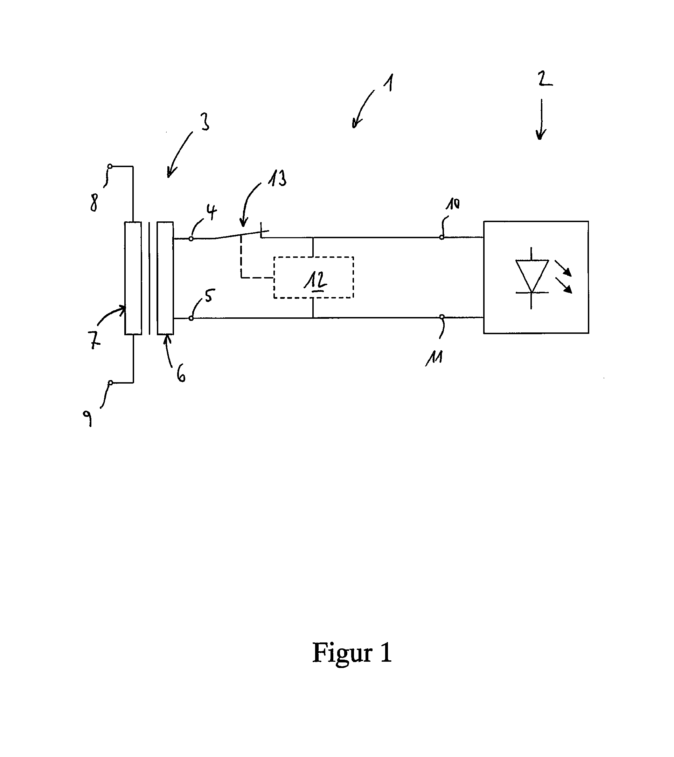

Gemäß Figur 1 ist die Adapterschaltung 1 zwischen einem Schaltkreis 2 eines mit LED als Leuchtmittel ausgestatteten Flughafenfeuers und einem Speisetransformator 3 vorgesehen. Die Adapterschaltung 1 weist zwei Eingänge 4, 5 auf, über die die Adapterschaltung 1 mit einer Sekundärseite 6 des Speisetransformators 3 verbunden ist. Der Speisetransformator 3 selbst ist mit einer Primärseite 7 über zwei Verbindungsanschlüsse 8, 9 an eine nicht dargestellte Wechselstrom-Netzleitung angeschlossen. Über zwei Ausgänge 10, 11 der Adapterschaltung 1 ist diese mit dem Schaltkreis des LED-Flughafenfeuers verbunden.

Die Adapterschaltung 1 selbst umfasst eine Ansteuerschaltung 12 sowie ein Schaltelement 13, welches über die Ansteuerschaltung 12 betätigt werden kann. Das Schaltelement 13 ist zwischen der Sekundärseite 6 des Speisetransformators 3 einerseits und der Ansteuerschaltung 12 andererseits vorgesehen. Die Ansteuerschaltung 12 findet sich zwischen dem Schaltelement 13 und dem Schaltkreis 2 für das LED-Flughafenfeuer, wobei die Ansteuerschaltung 12 mittelbar über das Schaltelement 13 mit der Sekundärseite 6 (Sekundärwicklung) des Speisetransformators 3 verbunden ist. Sofern das Schaltelement 13 über die Ansteuerschaltung 12 in einen Öffnungszustand verbracht wird, ist der Schaltkreis 2 für das LED-Flughafenfeuer von dem Speisetransformator 3 getrennt. Über die Sekundärseite 6 des Speisetransformators 3 fließt im Öffnungszustand des Schaltelements 13 kein Strom. Insbesondere fließt im Öffnungszustand des Schaltelements 13 kein Reststrom über die Ansteuerschaltung 12. In einem Verbindungszustand des Schaltelements 13 sind der Speisetransformator 3 und der Schaltkreis 2 für das LED-Flughafenfeuer verbunden.

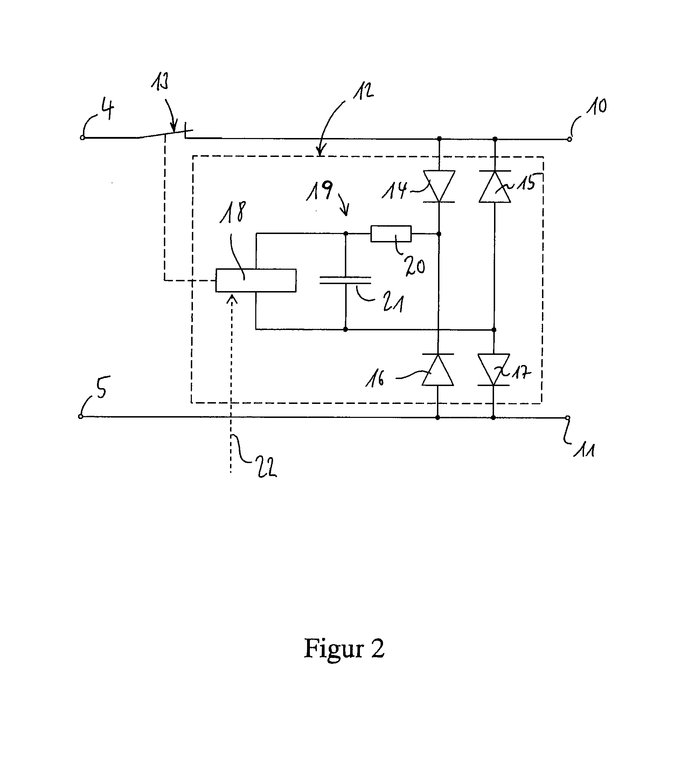

Figur 2 zeigt eine detaillierte Darstellung der Adapterschaltung 1 nach Figur 1. Die Ansteuerschaltung 12 umfasst insgesamt vier Gleichrichterdioden, 14, 15, 16, 17, die nach Art einer Gleichrichterbrückenanordnung verschaltet sind. Über die Gleichrichterbrückenanordnung wird ein Relais 18 bestromt. Zwischen dem Relais 18 und der Gleichrichterbrückenanordnung findet sich eine Filteranordnung 19 mit einem Widerstand 20 und einem Kondensator 21, der parallel zu dem Relais 18 verschaltet ist.

Das Relais 18 ist nach Art eines bistabilen Relais, insbesondere nach Art eines Stützrelais, Haftrelais oder Stromstoßrelais ausgebildet. Das Schaltelement 13 wird bevorzugt durch einen Schaltkontakt des Relais 18 gebildet und durch das Bestromen einer Relaisspule betätigt, d. h. umgeschaltet. Auf ein separates Schaltelement, insbesondere auf ein Halbleiterschaltelement wie einem Triac, einem Thyristor oder einem MOSFET, kann in dieser Ausführungsform verzichtet werden. Durch die Verwendung des bistabilen Relais 18 ist sichergestellt, dass der Schaltzustand des Relais 18 auch im unbestromten Zustand erhalten bleibt.

Überschreitet eine an dem Relais 18 anliegende Spannung ein vorgegebenes Spannungsniveau (Trigger-Spannung), wird das Schaltelement 13 in einen Öffnungszustand verbracht und der Speisetransformator 3 von dem Schaltkreis 2 des LED-Flughafenfeuers getrennt. Unterhalb des Spannungsniveaus befindet sich das Schaltelement 13 in dem Verbindungszustand und der Speisetransformator 3 ist mit dem Schaltkreis 2 für das LED-Flughafenfeuer verbunden.

Das Relais 18 verfügt über einen Steuerzugang 22. Da das Relais 18 als bistabiles Relais 18 seinen Schaltzustand auch unbestromt behält und insofern als ein Zustandsspeicher der Adapterschaltung 1 dient, kann der Schaltzustand des Relais 18 über den Steuereingang 22 manuell geändert und insbesondere in den Verbindungszustand zurückversetzt werden. Dies ist beispielsweise durchzuführen, wenn nach einem Defekt bzw. einem Fehlerzustand bei geöffnetem Relaiskontakt 13 das LED-Flughafenfeuer gewartet wird und vor der Inbetriebnahme des LED-Flughafenfeuers das bistabile Relais manuell in den Verbindungszustand verbracht werden soll. Beispielsweise erfolgt diese manuelle Relaisbetätigung im Rahmen der Instandsetzungsarbeiten lokal vor Ort unmittelbar an der benachbart zu dem Schaltkreis 2 des LED-Flughafenfeuers vorgesehenen Adapterschaltung 1.

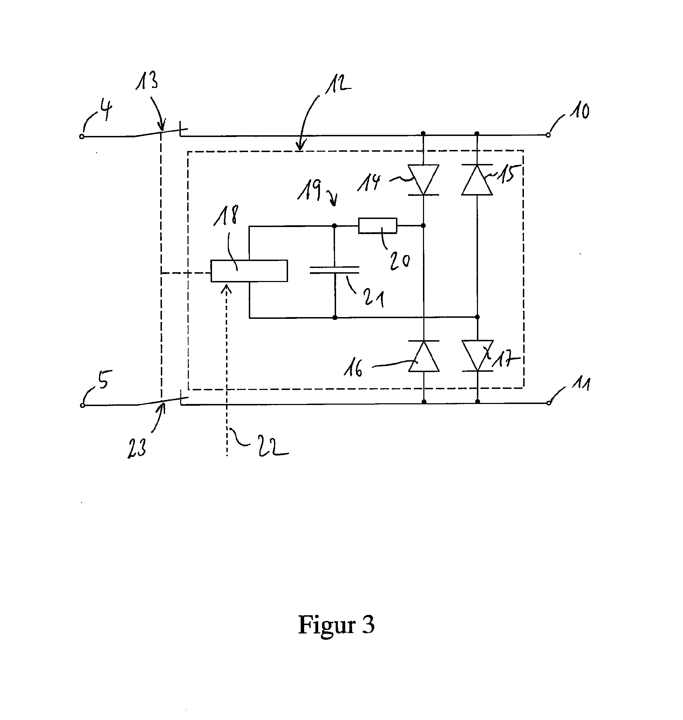

Nach einer alternativen Ausführungsform der Erfindung gemäß Figur 3 ist das bistabile Relais 18 als ein Relais 18 mit doppeltem Schaltkontakt 13, 23 (Schaltelement 13, 23) ausgebildet. Das doppelt wirkende Relais mit den zwei Schaltkontakten 13, 23 ist so vorgesehen, dass beide Eingänge 4, 5 der Adapterschaltung 1 von den korrespondierenden Ausgängen 10, 11 getrennt sind. Insofern sind die Schaltkontakte 13, 23 zwei die Eingänge 4, 5 mit den Ausgängen 10, 11 verbindenden Leitungen zugeordnet. Erfindungsgemäß ist wenigstens ein Schaltelement 13, 23 zwischen dem Speisetransformator 3 und der Ansteuerschaltung 12 vorgesehen. Vorliegend sind beide Schaltelemente 13, 23 der Ansteuerschaltung 12 auf einer dem Schaltkreis 2 für das LED-Flughafenfeuer abgewandten Seite zwischen der Ansteuerschaltung 12 und dem Speisetransformator 3 zugeordnet.

Gleiche Bauteile und Bauteilfunktionen sind durch gleiche Bezugszeichen gekennzeichnet.

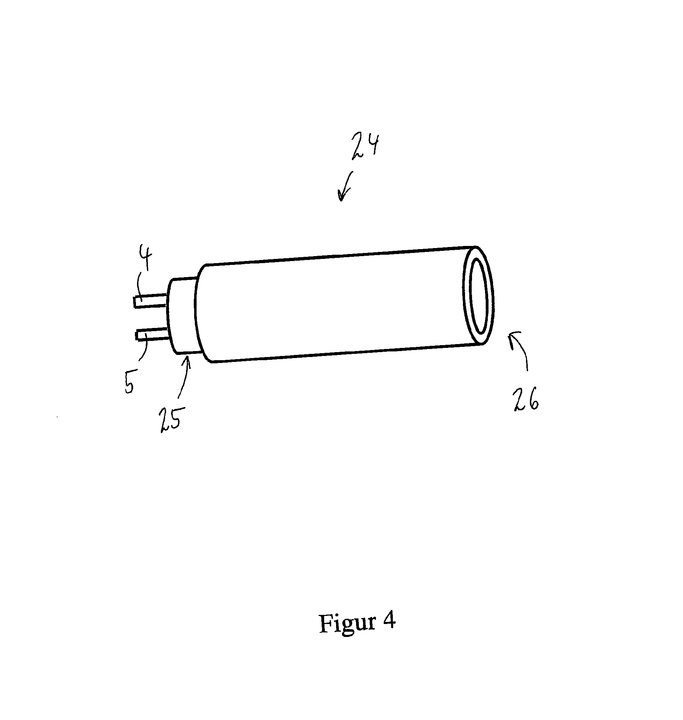

Figur 4 zeigt einen Adapter 24 mit einem Stecker 25 und einer Kupplung 26. Der Stecker 25 und die Kupplung 26 sind beispielsweise als L-823-Stecker bzw. L-823-Kupplung ausgebildet. Die Adapterschaltung 1 ist in dem Adapter 24 verbaut, wobei zwei Kontaktfinger des Steckers 25 als Eingänge 4,5 der Adapterschaltung 1 ausgebildet sind und mit der Sekundärseite 6 des Speisetransformators 3 verbunden werden können. Der Adapter 24 ist insbesondere räumlich benachbart zu dem LED-Flughafenfeuer vorgesehen und über die Kupplung mit dem Schaltkreis 2 verbunden.

### Bezugszeichenliste

- 1: Adapterschaltung
- 2: Schaltkreis
- 3: Speisetransformator
- 4: Eingang
- 5: Eingang
- 6: Sekundärseite
- 7: Primärseite
- 8: Verbindungsanschluss
- 9: Verbindungsanschluss
- 10: Ausgang
- 11: Ausgang
- 12: Ansteuerschaltung
- 13: Schaltkontakt (Schaltelement)
- 14: Gleichrichterdiode
- 15: Gleichrichterdiode
- 16: Gleichrichterdiode
- 17: Gleichrichterdiode
- 18: Relais
- 19: Filteranordnung
- 20: Widerstand
- 21: Kondensator
- 22: Steuereingang
- 23: Schaltkontakt (Schaltelement)
- 24: Adapter
- 25: Stecker
- 26: Kupplung

## Patentansprüche

1. Adapterschaltung (1) zum Verbinden eines Schaltkreises (2) eines mit LED als Leuchtmittel ausgestatteten Flughafenfeuers und einer sekundärseitigen Wicklung (Sekundärseite 6) eines Speisetransformators (3), wobei wenigstens ein Schaltelement (13, 23) vorgesehen ist zum wahlweisen Herstellen oder Unterbrechen der Verbindung und wobei wenigstens eine Ansteuerschaltung (12) vorgesehen ist zum Betätigen des Schaltelements (13, 23) beim Überschreiten eines vorgegebenen Spannungsniveaus, **dadurch gekennzeichnet, dass** das Schaltelement (13, 23) zwischen der Ansteuerschaltung (12) und der Sekundärseite (6) des Speisetransformators (3) vorgesehen ist und/oder dass die Ansteuerschaltung (12) mit dem Schaltkontakt (13, 23) und dem Schaltkreis (2) des LED-Flughafenfeuers verbunden ist..

2. Adapterschaltung nach Anspruch 1, **dadurch gekennzeichnet, dass** ein bistabiles Relais (18) mit wenigstens einem Schaltkontakt und mit einer Relaisspule (18) zum Betätigen des Schaltkontakts vorgesehen ist, wobei der Schaltkontakt als das mit der Ansteuerschaltung (12) zusammenwirkende Schaltelement (13, 23) dient und wobei die Verbindung des Schaltkreises (2) des LED-Flughafenfeuers mit dem Speisetransformator (3) in einem Verbindungszustand des Relais (18) hergestellt ist oder in einem Öffnungszustand desselben getrennt ist.

3. Adapterschaltung (1) nach Anspruch 1 oder 2, **dadurch gekennzeichnet, dass** die Ansteuerschaltung (12) wenigstens eine mit dem Schaltkreis (2) des LED-Flughafenfeuers verbundene Gleichrichterdiode (14, 15, 16, 17) und eine Filteranordnung (19) zum Filtern von Strom und Spannung der Gleichrichterdiode (14, 15, 16, 17) umfasst.

4. Adapterschaltung (1) nach einem der Ansprüche 1 bis 3, **dadurch gekennzeichnet, dass** das bistabile Relais (18) als ein Stromstoßrelais oder als ein Haftrelais oder als ein Stützrelais ausgebildet ist.

5. Adapterschaltung nach einem der Ansprüche 1 bis 4, **dadurch gekennzeichnet, dass** das bistabile Relais (18) einen Steuereingang (22) aufweist zum Zurücksetzen des Relais (18) in dem Verbindungszustand.

6. Adapterschaltung (1) nach einem der Ansprüche 1 bis 5, **dadurch gekennzeichnet, dass** die Sekundärseite (6) des Speisetransformators (3) und der Schaltkreis (2) des LED-Flughafenfeuers über zwei Leitungen elektrisch leitend verbunden sind und dass zwei Schaltkontakte (13, 23) vorgesehen sind, wobei jeder Leitung ein Schaltkontakt (13, 23) zugeordnet ist und wobei die zwei Schaltkontakte (13, 23) mittels einer gemeinsamen Relaisspule betätigbar sind.

7. Adapterschaltung (1) nach einem der Ansprüche 1 bis 6, **dadurch gekennzeichnet, dass** die Ansteuerschaltung (12) und/oder das bistabile Relais (18) in einem gemeinsamen Gehäuse mit dem Schaltkreis (2) für das LED-Flughafenfeuer verbaut sind.

8. Adapterschaltung (1) nach einem der Ansprüche 1 bis 7, **dadurch gekennzeichnet, dass** die Filteranordnung (19) einen Widerstand (20) und einen in Reihe zu dem Widerstand verschalteten Kondensator (21) aufweist.

9. Adapterschaltung (1) nach einem der Ansprüche 1 bis 8, **dadurch gekennzeichnet, dass** die Relaisspule parallel verschaltet ist zu dem Kondensator (21) der Filteranordnung (19) vorgesehen ist.
